# EUROPÄISCHE PATENTANMELDUNG

(11) **EP 2 890 078 A1**
(43) Veröffentlichungstag der Anmeldung: **01.07.2015**
(21) Anmeldenummer: 14004283.9
(22) Anmeldetag: 18.12.2014
(51) Int. Cl.: H04L 29/06, G06F 21/82

(54) **Verfahren und Vorrichtungen zum Verwenden eines Sicherheitselements mit einem mobilen Endgerät**

(30) Priorität: 20.12.2013 DE 102013021935
(71) Anmelder: Giesecke & Devrient GmbH, 81677 München (DE)
(72) Erfinder: Meister, Gisela, 81737 München (DE); Eichholz, Jan, 80997 München (DE)

(57) **Zusammenfassung**

Es wird ein Verfahren zum Verwenden eines Sicherheitselements (10) mit einem mobilen Endgerät (20) bereitgestellt, das eine Eingabeeinrichtung (22), vorzugsweise eine Tastatur, zur Eingabe von Daten und/ oder eine Ausgabeeinrichtung (24), vorzugsweise ein Display, zur Ausgabe von Daten umfasst. Dabei umfasst das Verfahren die folgenden Schritte: das kryptographische Binden des Sicherheitselements (10) an das mobile Endgerät (2); und das Verwenden der Eingabeeinrichtung (22) und/oder der Ausgabeeinrichtung (24) des mobilen Endgeräts (20) als Eingabeeinrichtung und/oder Ausgabeeinrichtung des Sicherheitselements (10). Vorzugsweise umfasst der Schritt des kryptographischen Bindens des Sicherheitselements (10) an das mobile Endgerät (20) den Schritt des Vereinbarens eines symmetrischen oder asymmetrischen Schlüssels zwischen dem Sicherheitselement (10) und dem mobilen Endgerät (20). Vorzugsweise ist in dem mobilen Endgerät (20) eine Prozessoreinheit (30) vorgesehen, in der eine normale Laufzeitumgebung (NZ) und eine gesicherte Laufzeitumgebung (ZT) implementiert sind. Dabei ist der zwischen dem Sicherheitselement (10) und dem mobilen Endgerät (20) vereinbarte Schlüssel zum Binden des Sicherheitselements (10) an das mobile Endgerät (20) in der gesicherten Laufzeitumgebung (TZ) des mobilen Endgeräts (20) hinterlegt.

## Beschreibung

Die Erfindung betrifft Verfahren und Vorrichtungen zum Verwenden eines Sicherheitselements mit einem mobilen Endgerät. Insbesondere betrifft die Erfindung Verfahren und Vorrichtungen zum Verwenden einer Chipkarte mit einem Smartphone, das eine Tastatur und/ oder ein Display aufweist.

Herkömmliche Sicherheitselemente, wie beispielsweise Chipkarten, weisen in der Regel kein Display und keine Tastatur auf. Eine direkte Integration eines Displays und einer Tastatur in einer Chipkarte würde jedoch für viele Anwendungen einen Gewinn an Sicherheit und Komfort bedeuten. So könnte beispielsweise eine Geldkarte das darauf vorhandene Guthaben oder eine OTP-Smart-Card den von der Karte erzeugten OTP-Code direkt auf dem Display anzeigen. Gründe dafür, dass herkömmliche Chipkarten in der Regel kein Display und keine Tastatur aufweisen, sind unter anderem, dass die Herstellung von Chipkarten mit Display und Tastatur bedeutend teuer als die Herstellung herkömmlicher Chipkarten ohne Display und Tastatur ist, ein Display und eine Tastatur für eine Chipkarte für die geplante Lebensdauer der restlichen Komponenten der Chipkarte ausgelegt sein müssen und aufgrund der beschränkten Fläche einer Chipkarte die Verwendung einer Tastatur oder eines Displays auf einer Chipkarte in der Regel wenig komfortabel für den Benutzer ist.

Vor diesem Hintergrund stellt sich der vorliegenden Erfindung die Aufgabe, Verfahren und Vorrichtungen bereitzustellen, die es ermöglichen, mit einem Sicherheitselement, insbesondere einer Chipkarte, ein Display und/ oder eine Tastatur zu verwenden.

Diese Aufgabe wird gemäß einem ersten Aspekt der Erfindung durch ein Verfahren zum Verwenden eines Sicherheitselements mit einem mobilen Endgerät nach Anspruch 1 gelöst. Ein entsprechendes Sicherheitselement sowie ein entsprechendes mobiles Endgerät sind Gegenstand der unabhängigen Vorrichtungsansprüche. Vorteilhafte Weiterbildungen der Erfindung sind in den Unteransprüchen definiert.

Die Erfindung geht von dem Grundgedanken aus, einem Sicherheitselement, vorzugsweise einer Chipkarte, den Zugang zu einer Tastatur und/ oder einem Display zu verschaffen, indem das Sicherheitselement kryptographisch an ein mobiles Endgerät mit einer Tastatur und/ oder einem Display gebunden wird.

Gemäß einem ersten Aspekt der Erfindung wird ein Verfahren zum Verwenden eines Sicherheitselements mit einem mobilen Endgerät bereitgestellt, das eine Eingabeeinrichtung, vorzugsweise eine Tastatur, zur Eingabe von Daten und/ oder eine Ausgabeeinrichtung, vorzugsweise ein Display, zur Ausgabe von Daten umfasst. Dabei umfasst das Verfahren die folgenden Schritte: das kryptographische Binden des Sicherheitselements an das mobile Endgerät; und das Verwenden der Eingabeeinrichtung und/ oder der Ausgabeeinrichtung des mobilen Endgeräts als Eingabeeinrichtung und/ oder Ausgabeeinrichtung des an das mobile Endgerät gebundenen Sicherheitselements.

Vorzugsweise umfasst der Schritt des kryptographischen Bindens des Sicherheitselements an das mobile Endgerät den Schritt des Vereinbarens eines symmetrischen oder asymmetrischen Schlüssels zwischen dem Sicherheitselement und dem mobilen Endgerät.

Gemäß bevorzugter Ausführungsformen der Erfindung ist in dem mobilen Endgerät eine Prozessoreinheit vorgesehen, in der eine normale Laufzeitumgebung und eine gesicherte Laufzeitumgebung implementiert sind. Dabei ist der zwischen dem Sicherheitselement und dem mobilen Endgerät vereinbarte Schlüssel zum Binden des Sicherheitselements an das mobile Endgerät in der gesicherten Laufzeitumgebung des mobilen Endgeräts hinterlegt.

Vorzugsweise ist ein Eingabeeinrichtungstreiber in der gesicherten Laufzeitumgebung implementiert, der dazu ausgestaltet ist, Eingaben über die Eingabeeinrichtung des mobilen Endgeräts zur Weiterverarbeitung gesichert an die gesicherte Laufzeitumgebung der Prozessoreinheit des mobilen Endgeräts weiterzuleiten.

Alternativ oder zusätzlich ist ein Ausgabeeinrichtungstreiber in der gesicherten Laufzeitumgebung implementiert, der dazu ausgestaltet ist, von der Prozessoreinheit des mobilen Endgeräts bereitgestellte Daten sicher an die Ausgabeeinrichtung zu übertragen und auf dieser anzeigen zu lassen.

Alternativ oder zusätzlich ist ein Kommunikationsmodultreiber in der gesicherten Laufzeitumgebung implementiert, der dazu ausgestaltet ist, von der Prozessoreinheit bereitgestellte Daten über ein Kommunikationsmodul des mobilen Endgeräts sicher an das Sicherheitselement zu übertragen bzw. von dem Sicherheitselement zu empfangen.

Vorzugsweise kann der Schritt des Bindens des Sicherheitselements an das mobile Endgerät nur dann durchgeführt werden kann, wenn das Sicherheitselement nicht bereits an ein anderes mobiles Endgerät gebunden ist, d.h. ungebunden ist.

Gemäß einem zweiten Aspekt stellt die Erfindung ein Sicherheitselement bereit, das dazu ausgestaltet ist, mit einem mobilen Endgerät gemäß dem Verfahren gemäß dem ersten Aspekt der Erfindung verwendet zu werden.

Vorzugsweise ist das Sicherheitselement als Chipkarte ausgestaltet. Gemäß einem dritten Aspekt stellt die Erfindung ein mobiles Endgerät bereit, das dazu ausgestaltet ist, mit einem Sicherheitselement gemäß dem Verfahren gemäß dem ersten Aspekt der Erfindung verwendet zu werden.

Vorzugsweise ist das mobile Endgerät als Smartphone ausgestaltet.

Vorzugsweise sind das Kommunikationsmodul des mobilen Endgeräts und das Sicherheitselement derart ausgestaltet, dass die gesicherte Kommunikation zwischen dem Sicherheitselement und dem mobilen Endgerät vorzugsweise über die Luftschnittstelle gemäß einem Nahbereichskommunikationsstandard bzw. -Protokoll erfolgt, wobei ein gesicherter Kommunikationskanal zwischen dem mobilen Endgerät und dem Sicherheitselement ausgebildet werden kann, wenn das Sicherheitselement in den Nahbereich des mobilen Endgeräts eintritt. Bevorzugte Nahbereichskommunikationsstandards bzw. -Protokolle sind NFC, Bluetooth, RFID, WLAN, DECT, ZigBee oder Infrarot. Bei der bevorzugten Verwendung einer Kommunikation gemäß dem NFC-Standard übernimmt das mobile Endgerät vorzugsweise die Rolle des NFC-Lesegeräts und das Sicherheitselement die Rolle eines NFC-Tags bzw. NFC-Transponders. Alternativ kann die NFC-Kommunikation zwischen dem mobilen Endgerät und dem Sicherheitselement auch im Peer-to-Peer-Modus erfolgen. Statt einer Kommunikation zwischen dem mobilen Endgerät und dem Sicherheitselement mittels eines Nahbereichskommunikationsstandards bzw. -Protokolls können das mobile Endgerät und das Sicherheitselement aber auch mittels anderer Kommunikationsverfahren drahtlos oder kontaktbehaftet miteinander kommunizieren.

Vorzugsweise kommt beim Aufbau eines gesicherten Kommunikationskanals zwischen dem mobilen Endgerät und dem Sicherheitselement zumindest eine einseitige Authentisierung, beispielsweise in Form einer Challenge-Response-Authentisierung, zum Einsatz, bei der sich das Sicherheitselement gegenüber dem mobilen Endgerät authentisieren muss.

Die vorstehend beschriebenen bevorzugten Ausgestaltungen lassen sich im Rahmen des ersten Aspekts der Erfindung, d.h. im Rahmen eines Verfahrens zum Verwenden eines Sicherheitselements mit einem mobilen Endgerät, im Rahmen des zweiten Aspekts der Erfindung, d.h. im Rahmen eines hierzu ausgestalteten Sicherheitselements, sowie im Rahmen des dritten Aspekts der Erfindung, d.h. im Rahmen eines entsprechend ausgestalteten mobilen Endgeräts, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines Sicherheitselements in der Form einer Chipkarte und eines mobilen Endgeräts in der Form eines Smartphones, und
- Fig. 2: eine schematische Darstellung einer bevorzugten Ausführungsform der Schritte beim Verwenden der Chipkarte von Figur 1 mit dem Smartphone von Figur 1.

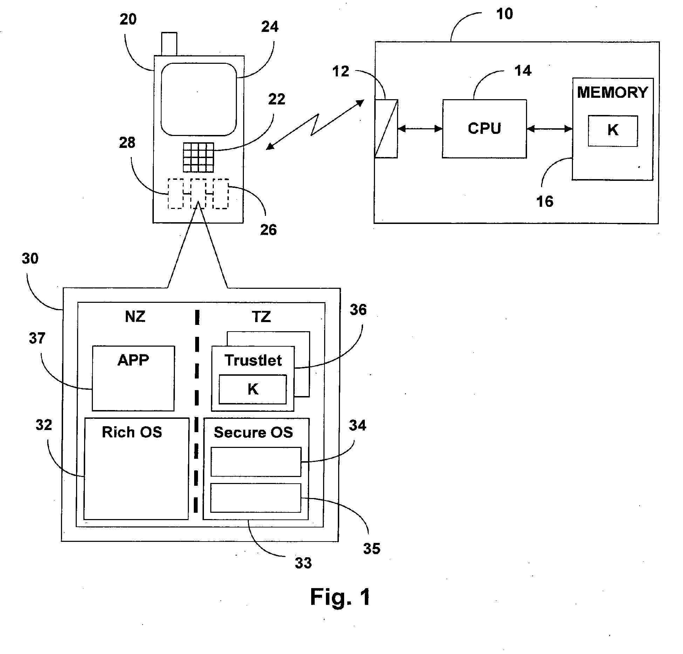

Figur 1 zeigt eine schematische Darstellung einer bevorzugten Ausführungsform eines erfindungsgemäßen Sicherheitselements in Form einer Chipkarte 10 in Kommunikation mit einem erfindungsgemäßen mobilen Endgerät in Form eines Smartphones 20.

Die Chipkarte 10 ist dazu ausgestaltet mit dem Smartphone 20 Daten auszutauschen. Als ein Austausch von Daten wird hier eine Signalübertragung, eine wechselseitige Steuerung und in einfachen Fällen auch eine Verbindung zwischen der Chipkarte 10 und dem Smartphone 20 verstanden. Im Allgemeinen kann ein Datenaustausch durch das aus der Informationstheorie bekannte Sender-Empfänger-Modell beschrieben werden: Daten bzw. Informationen werden in Zeichen kodiert und dann von einem Sender über einen Übertragungskanal an einen Empfänger übertragen. Dabei ist entscheidend, dass der Sender und der Empfänger dieselbe Kodierung verwenden, damit der Empfänger die Nachricht verstehen kann, d.h. die empfangenen Daten dekodieren kann.

Zur Datenübertragung bzw. Kommunikation zwischen der Chipkarte 10 und dem Smartphone 20 weisen sowohl die Chipkarte 10 als auch das Smartphone 20 geeignete Kommunikationsschnittstellen 12 und 26 auf. Die Schnittstellen 12 und 26 sind vorzugweise so ausgestaltet, dass die Kommunikation zwischen diesen bzw. zwischen der Chipkarte 10 und dem Smartphone 20 kontaktlos, d.h. über die Luftschnittstelle, erfolgt, wie dies in Figur 1 angedeutet ist.

Neben der Schnittstelle 12 zur Kommunikation mit dem Smartphone 20 umfasst das Sicherheitselement in Form einer Chipkarte 10 eine zentrale Verarbeitungseinheit ("central processing unit"; CPU) in Form eines Mikroprozessors 14, der in Kommunikationsverbindung mit der Schnittstelle 12 zur Kommunikation mit dem Smartphone 20 steht. Bekanntermaßen gehören zu den zentralen Aufgaben der CPU bzw. des Mikroprozessors 14 das Ausführen von arithmetischen und logischen Funktionen und das Lesen und Schreiben von Daten, wie dies durch ein auf dem Mikroprozessor 14 ablaufendes Computerprogramm in Form von Maschinenbefehlen definiert wird. Eine Speichereinheit ("memory unit") 16, die in Kommunikationsverbindung mit dem Mikroprozessor 14 steht, umfasst unter anderem zur Aufnahme der Maschinenbefehle eines vom Mikroprozessor 14 auszuführenden Computerprogramms einen flüchtigen Arbeitsspeicher (RAM). Ferner kann die Speichereinheit 16 einen nichtflüchtigen, vorzugsweise wieder beschreibbaren Speicher umfassen, in dem Daten sicher gespeichert sein können, die unter anderem den Inhaber der Chipkarte 10 betreffen. Vorzugsweise handelt es sich bei dem nichtflüchtigen Speicher um einen Flash-Speicher (Flash-EEPROM). Dabei kann es sich beispielsweise um einen Flash-Speicher mit einer NAND- oder einer NOR-Architektur handeln. Selbstverständlich kann die Speichereinheit 16 auch einen Festwertspeicher ("read only memory"; ROM) umfassen.

Wie dies dem Fachmann bekannt ist, kann die Kommunikation zwischen dem Mikroprozessor 14, der Speichereinheit 16, der Schnittstelle 12 und ggf. weiteren Komponenten der Chipkarte 10 vorzugsweise über einen oder mehrere Daten-, Adress- und/ oder Steuerbusse erfolgen, wie dies in Figur 1 durch gerade Doppelpfeile angedeutet ist. Der Fachmann wird ferner erkennen, dass ein erfindungsgemäßes Sicherheitselement 10 noch weitere als die in Figur 1 dargestellten elektronischen Funktionselemente aufweisen kann. So könnte die Chipkarte 10 beispielsweise ferner eine mit dem Mikroprozessor 14 interagierende Speicherverwaltungseinheit ("memory management unit") zur Verwaltung der Speichereinheit 16 aufweisen, oder der Mikroprozessor 14 könnte eine eigene interne Speichereinheit oder einen Coprozessor zur Durchführung kryptographischer Berechnungen aufweisen.

Der Sicherheitselement 10 kann, wenn es beispielsweise ein elektronisches Ausweisdokument darstellt, weitere Merkmale umfassen (nicht gezeigt). Diese können sichtbar auf einer Oberfläche der Chipkarte 10 aufgebracht, beispielsweise aufgedruckt sein und den Inhaber der Chipkarte identifizieren, beispielsweise durch seinen Namen oder ein Foto.

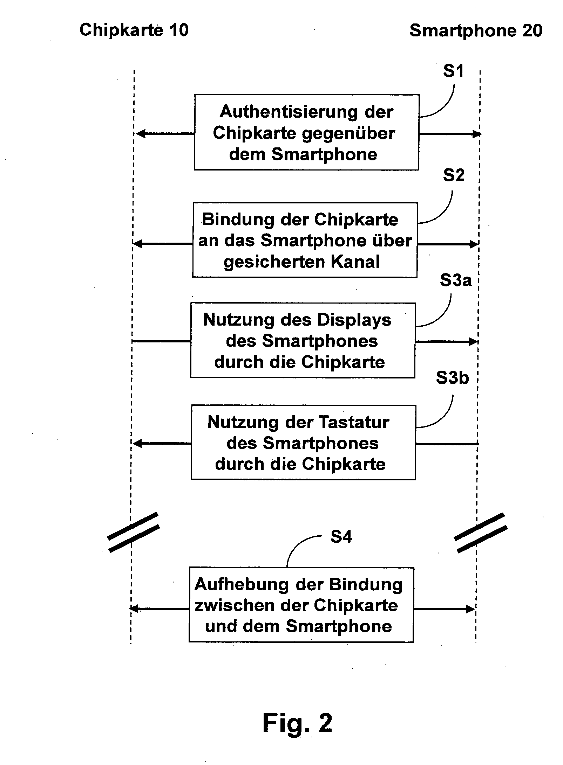

Auf der Speichereinheit 16 des Sicherheitselements 10 sind Daten und/ oder Programmcode hinterlegt, mittels derer eine erfindungsgemäße Bindung des Smartphones 20 an das Sicherheitselement 10 herbeigeführt werden kann, wie dies nachstehend unter Bezugnahme auf Figur 2 im Detail beschrieben wird.

Das mobile Endgerät 20 in Form eines Smartphones umfasst eine Eingabeeinrichtung bzw. Tastatur 22 für Benutzereingaben sowie ein Display bzw. eine Anzeigeeinrichtung 24 zur Anzeige von Informationen. Die Tastatur 22 und das Display 24 können auch in einem Touchscreen integriert sein. Das mobile Endgerät 20 umfasst ferner, wie bereits vorstehend beschrieben, eine Kommunikationsschnittstelle 26, beispielsweise ein NFC-Modul, zur gesicherten Kommunikation mit dem Sicherheitselement 10. Für den in Figur 1 dargestellten bevorzugten Fall, dass es sich bei dem mobilen Endgerät 20 um ein Smartphone handelt, umfasst das mobile Endgerät 20 vorzugsweise ferner ein Mobilfunk-Sicherheitselement 28, beispielsweise eine SIM-Karte, für die Kommunikation über ein Mobilfunknetz.

Das mobile Endgerät 20 in Form eines Smartphones umfasst ferner eine Prozessoreinheit 30, die dazu ausgestaltet ist, die unterschiedlichen Komponenten des mobilen Endgeräts 20 geeignet anzusteuern. Der Übersichtlichkeit halber ist die auf der Prozessoreinheit 30 implementierte bevorzugte Softwarearchitektur in Figur 1 außerhalb des mobilen Endgeräts 20 noch einmal schematisch im Detail dargestellt.

In der Prozessoreinheit 30 sind vorzugsweise eine normale, ungesicherte Laufzeitumgebung NZ ("Normal Zone") sowie eine gesicherte Laufzeitumgebung TZ ("TrustZone"; auch TEE ("trusted execution environment") genannt) beispielsweise in Form einer sogenannten ARM^{®} TrustZone^{®} oder eines TEE der Firma Trustonic implementiert. Dabei wird überwacht, ob die Prozessoreinheit in dem vertrauenswürdigen oder in dem nichtvertrauenswürdigen Bereich betrieben wird. Ferner wird ein Umschalten zwischen dem vertrauenswürdigen und dem nicht-vertrauenswürdigen Bereich überwacht.

In der hier beschriebenen bevorzugten Ausführungsform läuft auf der TrustZone TZ ein sicheres Betriebssystem 33 (Secure OS), beispielsweise die aus dem Stand der Technik bekannte Betriebssystem MobiCore^{®} oder das von der Firma Trustonic vertriebene sichere Betriebssystem. Demgegenüber enthält die normale Laufzeitumgebung NZ ein herkömmliches Smartphone-Betriebssystem 32, ein sogenanntes "Rich OS" mit einem weitreichenden Funktionsumfang, bei dem es sich z.B. um Android, Apple iOS, Windows Phone oder dergleichen handeln kann.

Die TrustZone TZ dient zur Ausführung von sicherheitskritischen Applikationen mit Hilfe des mobilen Endgeräts 20. Die gesicherte Laufzeitumgebung TZ ist dabei isoliert von der normalen Laufzeitumgebung NZ und verkapselt sicherheitskritische Prozesse, wodurch ein effizienter Schutz gegenüber Angriffen unbefugter Dritter erreicht wird. Die innerhalb der TrustZone TZ laufenden sicherheitskritischen Applikationen werden als Trustlets bezeichnet, wobei in Figur 1 beispielhaft das Trustlet 36 dargestellt ist. Im Unterschied hierzu laufen in der normalen Laufzeitumgebung NZ herkömmliche Applikationen, wobei in Figur 1 beispielhaft eine Applikation 37 ("APP") bezeichnet ist. Die Applikationen aus dem nicht-vertrauenswürdigen Bereich NZ, z.B. die Applikation 37 ("APP"), haben keinen Zugriff auf die Applikationen im vertrauenswürdigen Bereich TZ, z.B. das Trustlet 36.

Als betriebssystemnaher Dienst ist in der TrustZone TZ vorzugsweise ein Tastaturtreiber 34 implementiert. Der Tastaturtreiber 34 ist dazu ausgestaltet, Eingaben über die Tastatur 22 des mobilen Endgeräts 20 sicher an die gesicherte Laufzeitumgebung TZ der Prozessoreinheit 30 des mobilen Endgeräts 20 weiterzuleiten. Hierdurch ist sichergestellt, dass der eine potentielle Sicherheitslücke darstellende Kommunikationsweg zwischen der Tastatur 22 und der Prozessoreinheit 30 des mobilen Endgeräts 20 als Angriffsbereich für Manipulationen ausscheidet, da die Tastatur 22 des mobilen Endgeräts 20 sicher an die vertrauenswürdige Laufzeitumgebung TZ der Prozessoreinheit 30 angebunden ist.

Obgleich die Implementierung eines Displaytreibers im vertrauenswürdigen Bereich TZ aufgrund der Vielzahl erhältlicher Displays für mobile Endgeräte und Teilkomponenten zur Ansteuerung dieser Displays wie z.B. Grafikkarten in der Regel erheblich komplexer als die Implementierung z.B. eines Tastaturtreibers, wie dem Tastaturtreiber 34, ist, ist vorzugsweise neben dem Tastaturtreiber 34 in der TrustZone TZ ferner ein Displaytreiber 35 implementiert. Dabei ist der Displaytreiber dazu ausgestaltet, von der Prozessoreinheit 30 bereitgestellte Daten sicher an das Display 24 zu übertragen und auf diesem anzeigen zu lassen. Hierdurch wird gewährleistet, dass auch der Kommunikationsweg zwischen der Prozessoreinheit 30 und dem Display 24 des mobilen Endgeräts 20 als Angriffsbereich für Manipulationen ausscheidet, da das Display 24 sicher an die vertrauenswürdige Laufzeitumgebung TZ der Prozessoreinheit 30 angebunden ist.

Als weiterer betriebssystemnaher Service kann in der TrustZone TZ vorzugsweise ein Kommunikationsmodultreiber (nicht in Figur 1 dargestellt) implementiert sein. Ein solcher Kommunikationsmodultreiber ist dazu ausgestaltet, von der Prozessoreinheit 30 bereitgestellte Daten über das Kommunikationsmodul 26 sicher an das Sicherheitselement 10 zu übertragen. Hierdurch ist gewährleistet, dass auch der Kommunikationsweg zwischen der Prozessoreinheit 30 und dem Kommunikationsmodul 26 des mobilen Endgeräts 20 als Angriffsbereich für Manipulationen ausscheidet, da das Kommunikationsmodul 26 sicher an die vertrauenswürdige Laufzeitumgebung TZ der Prozessoreinheit 30 angebunden ist.

Figur 2 veranschaulicht einige Schritte, die bei einer erfindungsgemäß bevorzugten Ausführungsform eines Verfahrens zum Verwenden des Sicherheitselements in Form der Chipkarte 10 mit dem mobilen Endgerät in Form des Smartphones 20 durchgeführt werden.

In einem Schritt S1 von Figur 2 erfolgt vorzugsweise eine Authentisierung der Chipkarte 10 gegenüber dem Smartphone 20, beispielsweise eine Challenge-Response-Authentisierung.

In einem Schritt S2 von Figur 2 wird die Chipkarte 10 mittels kryptographischer Verfahren an das Smartphone 20 gebunden. Vorzugsweise kann eine solche kryptographische Bindung der Chipkarte 10 an das Smartphone 20 nur durchgeführt werden, wenn die Chipkarte 10 ungebunden ist, d.h. nicht bereits an ein anderes mobiles Endgerät gebunden ist. Vorzugsweise wird die Bindung der Chipkarte 10 an das Smartphone 20 über einen kryptographisch gesicherten Kommunikationskanal zwischen der Chipkarte 10 und dem Smartphone 20 durchgeführt. Für den Fall, dass die Bindung zwischen der Chipkarte 10 und dem Smartphone 20 in einer gesicherten Umgebung durchgeführt wird, kann auch ein ungesicherter Kommunikationskanal zwischen der Chipkarte 10 und dem Smartphone 20 verwendet werden.

Für eine kryptographische Absicherung des Kommunikationskanals zwischen der Chipkarte 10 und dem Smartphone 20 können beispielsweise symmetrische oder asymmetrische Kryptoverfahren verwendet werden, mittels derer die Chipkarte 10 und das Smartphone 20 in Schritt S2 von Figur 2 geeignete Schlüssel austauschen oder vereinbaren. Die Schlüssel können auch aus dem Authentisierungsschritt S1 von Figur 2 zwischen der Chipkarte 10 und dem Smartphone 20 gewonnen werden, beispielsweise im Rahmen eines Diffie-Hellman-Schlüsselaustauchverfahrens.

Ferner könnte zur Absicherung des Kommunikationskanals zwischen der Chipkarte 10 und dem Smartphone 20 das aus dem Stand bekannte PACE-Verfahren mit einem auf der Chipkarte 10 ablesbaren ID-Element genutzt werden.

Bei dem erfindungsgemäß bevorzugten Fall, dass das Smartphone 20 eine gesicherte Laufzeitumgebung aufweist, wird der kryptographische Schlüssel K, der im Rahmen der Bindung der Chipkarte 10 an das Smartphone 20 vereinbart worden ist, zum einen auf Seiten des Smartphones 20 von dem Trustlet 36 gesichert und verwaltet und zum anderen auf Seiten der Chipkarte 10 in der Speichereinheit 16 sicher hinterlegt.

Die Schritte S3a und S3b von Figur 2 stellen die Benutzung des Displays 24 bzw. der Tastatur 22 des Smartphones 20 durch die Chipkarte 10 dar. Wie bereits vorstehend erwähnt, ist die Benutzung des Displays 24 bzw. der Tastatur 22 des Smartphones 20 nur dann möglich, wenn vorher die kryptographische Bindung der Chipkarte 10 an das Smartphone 20 in Schritt S2 von Figur 2 durchgeführt worden ist.

Der zwischen der Chipkarte 10 und dem Smartphone 20 vereinbarte Schlüssel K wird dazu genutzt, um zwischen der Chipkarte 10 und dem Trustlet 36 im Smartphone 20 einen gesicherten Kommunikationskanal aufzubauen. Über diesen gesicherten Kommunikationskanal können die Chipkarte 10 und das Smartphone 20 Daten miteinander austauschen, beispielsweise vom Smartphone 20 an die Chipkarte 10 Daten, die mittels der Tastatur 22 des Smartphones 20 eingegeben werden (z.B. ein PIN-Code), und von der Chipkarte 10 an das Smartphone 20 Daten, die auf dem Display 24 des Smartphones 20 angezeigt werden sollen (z.B. OTP Codes oder das Guthaben auf einer Geldkarte). Dabei sorgen die in der TrustZone TZ des Smartphones 20 implementierten Treiber, vorzugsweise der Tastaturtreiber 34, der Displaytreiber 35 und/ oder der Kommunikationsmodultreiber, dass auch die Kommunikationswege innerhalb des Smartphones 20 gegenüber Angriffen, beispielsweise durch Malware, gesichert sind.

Wie dies der Fachmann erkennt, kann eine Chipkarte, die nicht im Besitz des zwischen der Chipkarte 10 und dem Smartphone 20 vereinbarten Schlüssels K ist, keinen gesicherten Kanal zum Smartphone für die Delegation der Ein- und Ausgabe aufbauen, und umgekehrt kann ein Smartphone, das nicht im Besitz des zwischen der Chipkarte 10 und dem Smartphone 20 vereinbarten Schlüssels K ist, keinen solchen gesicherten Kanal zu der Chipkarte 10 aufbauen.

Sobald die Nutzung der Tatstatur 22 und/ oder des Displays 24 des Smartphones 20 durch die Chipkarte 10 nicht mehr erforderlich ist, kann die Bindung zwischen der Chipkarte 10 und dem Smartphone 20 wieder aufgehoben werden (siehe Schritt S4 von Figur 2). Nach einer erneuten Authentisierung der Chipkarte 10 gegenüber dem Smartphone 20 mittels des gemeinsamen Geheimnisses in Form des Schlüssels K kann der Benutzer, vorzugsweise unter Anleitung des Trustlets 36 im Smartphone 20 die Bindung aufheben, vorzugsweise durch Eingabe eines PIN-Codes mittels der Tastatur 22 des Smartphones 20.

Gemäß einer erfindungsgemäßen Variante ist es denkbar, dass mittels eines beliebigen Chipkarten-Lesegeräts und die Verwendung eines speziellen, geheimen Codes (z.B. in Form eines PUK) die Chipkarte 10 wieder in den ungebundenen Zustand überführt werden kann.

Gemäß einer weiteren erfindungsgemäßen Variante ist es denkbar, dass der Hersteller bzw. Herausgeber der Chipkarte 10 die Möglichkeit hat, die Bindung an das Smartphone mittels eines nur ihm bekannten Geheimnisses bzw. Schlüssels aufzuheben.

Nach dem Aufheben der Bindung in Schritt S4 von Figur 2 kann die Chipkarte 10 eine Bindung mit einem anderen Smartphone eingehen, um die Tastatur und/ oder das Display dieses anderen Smartphones verwenden zu können.

## Patentansprüche

1. Verfahren zum Verwenden eines Sicherheitselements (10) mit einem mobilen Endgerät (20), das eine Eingabeeinrichtung (22) zur Eingabe von Daten und/ oder eine Ausgabeeinrichtung (24) zur Ausgabe von Daten umfasst, wobei das Verfahren die folgenden Schritte umfasst:
das Binden des Sicherheitselements (10) an das mobile Endgerät (20); und
das Verwenden der Eingabeeinrichtung (22) und/ oder der Ausgabeeinrichtung (24) des mobilen Endgeräts (20) als Eingabeeinrichtung und/ oder Ausgabeeinrichtung des an das mobile Endgerät (20) gebundenen Sicherheitselements (10).

2. Verfahren nach Anspruch 1, wobei der Schritt des Bindens des Sicherheitselements (10) an das mobile Endgerät (20) den Schritt des Vereinbarens eines symmetrischen oder asymmetrischen Schlüssels zwischen dem Sicherheitselement (10) und dem mobilen Endgerät (20) umfasst.

3. Verfahren nach Anspruch 2, wobei in dem mobilen Endgerät (20) eine Prozessoreinheit (30) vorgesehen ist, in der eine normale Laufzeitumgebung (NZ) und eine gesicherte Laufzeitumgebung (TZ) implementiert sind, wobei der zwischen dem Sicherheitselement (10) und dem mobilen Endgerät (20) vereinbarte Schlüssel in der gesicherten Laufzeitumgebung des mobilen Endgeräts (20) hinterlegt ist.

4. Verfahren nach Anspruch 3, wobei ein Eingabeeinrichtungstreiber (34) in der gesicherten Laufzeitumgebung (TZ) implementiert ist, der dazu ausgestaltet ist, Eingaben über die Eingabeeinrichtung (22, 24) des mobilen Endgeräts (20) zur Weiterverarbeitung gesichert an die gesicherte Laufzeitumgebung (TZ) der Prozessoreinheit (30) des mobilen Endgeräts (20) weiterzuleiten.

5. Verfahren nach Anspruch 3, wobei ein Ausgabeeinrichtungstreiber (35) in der gesicherten Laufzeitumgebung (TZ) implementiert ist, der dazu ausgestaltet ist, von der Prozessoreinheit (30) des mobilen Endgeräts (20) bereitgestellte Daten sicher an die Ausgabeeinrichtung (24) zu übertragen und auf dieser anzeigen zu lassen.

6. Verfahren nach Anspruch 3, wobei ein Kommunikationsmodultreiber in der gesicherten Laufzeitumgebung (TZ) implementiert ist, der dazu ausgestaltet ist, von der Prozessoreinheit (30) bereitgestellte Daten über ein Kommunikationsmodul (26) des mobilen Endgeräts (20) sicher an das Sicherheitselement (10) zu übertragen.

7. Verfahren nach Anspruch 1, wobei der Schritt des Bindens des Sicherheitselements (10) an das mobile Endgerät (20) nur durchgeführt werden kann, falls das Sicherheitselement (10) nicht bereits an ein anderes mobiles Endgerät gebunden ist.

8. Sicherheitselement (10), das dazu ausgestaltet ist, mit einem mobilen Endgerät (20) gemäß dem Verfahren nach einem der Ansprüche 1 bis 7 verwendet zu werden.

9. Sicherheitselement (10) nach Anspruch 8, wobei das Sicherheitselement (10) als Chipkarte ausgestaltet ist.

10. Mobiles Endgerät (20), das dazu ausgestaltet ist, mit einem Sicherheitselement (10) gemäß dem Verfahren nach einem der Ansprüche 1 bis 7 verwendet zu werden.

11. Mobiles Endgerät (20) nach Anspruch 10, wobei das mobile Endgerät (20) als Smartphone ausgestaltet ist.
